# EUROPEAN PATENT APPLICATION

(11) **EP 1 233 584 A1**
(43) Date of publication of application: **21.08.2002**
(21) Application number: 02075626.8
(22) Date of filing: 15.02.2002
(51) Int. Cl.: H04L 12/58

(54) **Method and device for transmitting electronic messages**

(30) Priority: 16.02.2001 NL 1017389
(71) Applicant: Gimbrère, Vincent Hypolite Marie, 84140 Montfavet (FR); Ramakers, Celine Johanna Ursula Marie, 4849 CE Dorst (NL)
(72) Inventor: Gimbrère, Vincent Hypolite Marie, 84140 Montfavet (FR); Ramakers, Celine Johanna Ursula Marie, 4849 CE Dorst (NL)
(74) Representative: Griebling, Onno

(57) **Abstract**

A method for sending, through a computer network such as internet (I), a registered email notice with confirmation of reception is described.

A sender (S) first sends a request email to an intermediary (X).

The intermediary (X) provides a message part with an electronic authentication feature.

The intermediary (X) notifies (31, 32, 33) the authenticated notice to the sender (S), after which the sender (S) sends (34, 35, 36) a confirmation message to the intermediary (X). The intermediary (X) generates a webpage (WP), and places the authenticated notice on this webpage (WP), provided with an access barrier.

The intermediary (X) generates an announcement email notice, comprising a hyperlink to the said webpage (WP) as well as a key or password, and sends (51, 52, 53) this announcement email notice to the email address of the addressee (A).

When the addressee visits the said webpage, the intermediary informs (71, 72, 73) the sender of this fact.

## Description

The present invention relates in general to transmitting electronic notices and/or files through a computer network such as for instance the internet.

The structure of such computer networks, and particularly internet, is considered generally known and will not be explained in more detail.

Of course, the transmitter and the intended receiver of the electronic notices and/or files to be sent should have at their disposal an input apparatus for transmitting notices and/or files and a receiving apparatus for receiving notices and/or files, respectively, and they should have at their disposal an access to the computer network in question. Further, the sender should have at its disposal the electronic address of the intended receiver. Usually, said apparatuses will be a PC or the like, but the input apparatus can also be a suitable telephone or the like. Usually, said apparatuses themselves are provided with software suitable for sending and/or receiving notices and/or files. This can be software specifically intended for sending/receiving notices and/or files, but it can also be software which is also suitable for other applications, such as for instance browser software. Alternatively, the sender or receiver can use software which is made available by an access provider for the computer network. All these possibilities are known per se, and will not be explained here in more detail.

In many ways, an electronic notice can be considered as an electronic equivalent of a conventional letter delivery. Also in the case of an ordinary letter delivery, the sender must add to the notice the correct address of the addressee, and the sender must hand the addressed notice to a postal instance, which postal instance then, through its own infrastructure, takes care of the physical transport of the notice document to the address of the addressee. This postal instance can be a conventional PTT, or a courier company, or the like.

The conventional postal transmission has some disadvantages. In the first place, the sender has no certainty that the document has arrived at the intended addressee, unless the receiver himself takes action and sends a notice to the sender in order to confirm the receipt of the document. Further, there are situations in which the sender desires to have a proof that he has sent a certain notice to a certain addressee; in the case of conventional mail transmission, the sender does not have such proof available.

Besides "ordinary" postal services, i.e. the transport of mail documents and delivering to an addressee, postal instances of the above-described type also offer more extended postal services, such as delivery with confirmation of receipt and/or registered mail. Since these extended postal services are commonly known, they need not be described here in more detail. It is true that these extended postal services reduce the said disadvantages, but these disadvantages are not completely eliminated. When using registered dispatch, for instance, it is possible to proof that a notice has been sent to a certain addressee at a certain date, but the contents of that notice cannot be proven.

A first objective of the present invention is to provide a method which offers, in relation to the dispatch of electronic notices and/or files, comparable services as said extended postal services offer with relation to paper letter deliveries.

A special objective of the present invention is to provide a method for sending electronic notices and/or files in such a way that the sender can get absolute certainty with respect to the fact that the notice and/or file in question has reached the addressee, at least that the addressee has been able to take notice of the notice and/or file concerned.

There are situations where legal consequences are connected to the fact that the one party sends a message to the other party. Herein, in many cases it is of importance that the sending party can proof that he has sent the message concerned to the other party, and that the other party has received this message. For conventional, i.e. paper shippings, the service "registered dispatch" offers an aid, but, as already mentioned, this involves limitations. For electronic notices, provisions which offer the sending party such proof do not yet exist.

Therefore, it is a special objective of the present invention to provide a method for transmitting electronic notices and/or files in such a way that the sender can obtain a document with which he can provide the above-described proof.

According to an important aspect of the present invention, the electronic notice is authenticated by a third party, which is completely independent of the sender and the addressee, and this authenticated notice is kept by this third party at a location outside the power of the sender and the addressee. The authenticated notice is brought to the notice of the addressee. To that end, the authenticated notice is placed on a webpage, provided with an access barrier which can only be overcome by an authorized visitor, and an announcement is sent to the addressee that a notice awaits him on the webpage concerned, which announcement is provided with a key or password fitting to said access barrier. If the addressee, using said key or password, visits the webpage concerned, this is established by the third party, and the sender is notified. If desired, this third party can draw up a document which comprises the authenticated notice, and in which it is declared when it has been sent by the sending party and when the addressee has visited the webpage concerned, such that said proof can be provided.

Thus, the present invention goes further than the conventional written (paper) form of dispatch, in that according to the present invention also the authenticity of the contents of the transferred notice can be guaranteed. Therefore, the service offered by the present invention fulfills a great number of security criteria, in such a way that it is possible to assign or have assigned legal power of proof to a shipping which is dispatched while using the service proposed by the present invention.

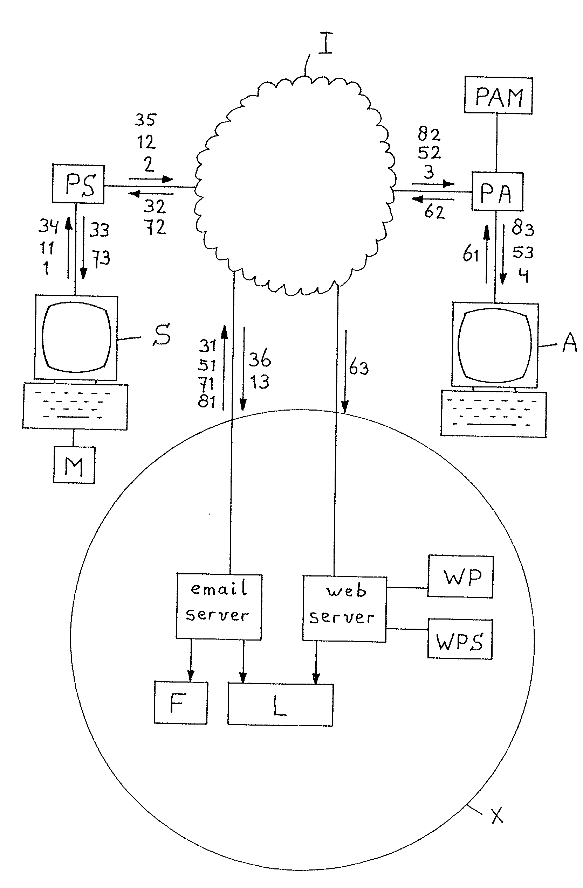

The mentioned and other aspects, features and advantages of the present invention will be further clarified by the following description of a method according to the invention for registered transmission of an electronic mail and/or file through a computer network, with reference to the drawing, in which the figure schematically illustrates a communication structure.

The figure schematically illustrates a communication structure in which two users are coupled to a network I through respective access providers. This network, for instance a computer network, can for instance be the internet, or can partly overlap therewith. Since the present invention is particularly, but not exclusively, intended for use with the internet, the present invention will in the following be specifically explained for this application example, and the network I in general will also be indicated with the phrase internet.

Further, in the following, the access provider will also be indicated with the phrase "provider".

In the following, it will be assumed that one of these users wishes to send an electronic notice; this user will be indicated as sender S and the provider concerned will be indicated as PS. Further it will be assumed that the second user shown in the figure is the intended receiver of the said notice; therefore, this user will be indicated with the phrase addressee A, and the provider concerned will be indicated as PA. In this respect it is noted that the two providers PS and PA can in fact be one and the same provider. Further it is noted that the apparatus (hardware) used by the providers PA and PS is also indicated with the phrase server; since the precise configuration of the hardware used by the providers PS and PA is beyond the extent of the present invention and is of no further importance here, this will not be described here in more detail.

In the context of the present invention, the phrase "electronic notice" is considered to comprise any electronic shipment. By way of example, the phrase "electronic notice" comprises an electronic file or document, an electronic text communication and an email notice either or not provided with annexes or attachments. Since the present invention is particularly but not exclusively intended for application when sending email notices through the internet, the present invention will hereinafter be specifically explained for this application example, and the electronic notice in general will also be indicated with the phrase email notice.

In the following, it will be assumed that the sender S has apparatus available suitable for drafting, sending and reading email notices. This apparatus can for instance, and as illustrated, be a PC; however, it will be clear for a person skilled in the art that other suitable apparatus exist for sending email notices through internet, such as for instance a telephone, a PDA (personal digital assistant), etc. In a specific alternative, this apparatus can be a telephone suitable for WAP communication.

Likewise, it will be assumed that the addressee A has available apparatus which at least is suitable for receiving email notices, and for visiting webpages. This apparatus can for instance, and as illustrated, be a PC; however, it will be clear to a person skilled in the art that other suitable apparatus exist for receiving email notices through internet, and visiting webpages, such as for instance a telephone, a PDA (personal digital assistant), etc. In a specific alternative, this apparatus can be a telephone suitable for WAP communication. The present invention will specifically be explained for communication to an email address of the addressee. For this reason, the phrase "email address" is also used hereinafter as the intended destination of notices directed to the addressee. However, it will be clear that, in case the sender A wishes to approach the addressee with a telephone suitable for reception of email notices, possibly a telephone suitable for WAP communication, the destination address of the notices directed to the addressee can be equal to the telephone number concerned; the phrase "email address" is considered to also comprise this modification. Therefore, it will be clear that the said network can also at least partially overlap with a telephone network.

At this apparatus, always an application suitable for sending email notices is installed, such as for instance the program Microsoft Outlook, the program Netscape Communicator, etc. Since such programs are well known per se, and do not form the subject of the present invention, they will not be explained here in more detail. Suffice it to note that the sender, in order to be able to apply the present invention, can make use of standard software, and that it is thus not necessary to adapt existing software suitable for sending email notices. The same applies to the addressee. Therefore, in the following it will be assumed that a person skilled in the present art understands what is meant with the expression "drafting an email notice", "sending a email notice", and "reading an email notice".

It is noted that it is also possible that the application suitable for sending email notices is not installed at the apparatus of the sender, but for instance at the provider PS concerned. This, too, is also known per se, and in this situation, the present invention is applicable, too.

Normally, email traffic takes place as follows. In a first step, the sender S drafts an email notice to be sent, in the usual way. The generated email notice comprises a section with some administrative data, such as the electronic destination address of the addressee A, the electronic address of the sender S, possible addresses for copy notices, a subject field, information on possible attached documents, and also a message part, i.e. a text typed by the sender S. When the sender is ready, he issues a command "send", after which the notice is sent (1) to the provider PS. In many cases, a copy of the notice sent remains behind in a memory section M of the apparatus of the sender.

On the basis of the address information added to the email notice, relating to the addressee A, the notice is further transmitted (2, 3) by the provider PS through the internet to the provider PA of the addressee A, where the notice is stored in a memory PAM belonging to the provider PA.

The addressee A himself must take action to ascertain whether his provider PA has received new notices intended for him. This is indicated as checking the mailbox. When the addressee A does that, the notice intended for him will be transferred to him (4) by his provider PA.

As already mentioned, the sender S has no guarantee whatsoever that the notice sent by him actually arrives at the addressee A. Further, the sender S can not even proof (in a legally conclusive way) that at a certain moment he has sent a certain notice to the addressee A; it is true that the sender S can possess a copy of the sent notice in a memory section M, while email applications usually keep a logbook in which is mentioned at which date and time a certain email notice has been sent, but these logbook data as well as the contents of the copy notice are in the power of the sender S and can be manipulated by him quite easily, such that no legal power of proof can be assigned to these data.

The transmission of an email notice according to the present invention takes place in a completely different way as will be explained hereinafter. An important aspect of the present invention regards the presence of an intermediary X coupled to the network I. Structurally, this intermediary X consists of hardware coupled to the network, of which details will be explained further, adapted to process notice traffic according to a predetermined protocol. To this end, this hardware can be provided with suitable control software, as will be clear to a person skilled in the art. The intermediary X is managed by an independent party which will be indicated as supervisor. In the sense of organization, this intermediary X can be considered as a provider of a service, namely the service "registered email", which service can if desired be used by the sender S when sending his email notice to the addressee A.

In a first embodiment according to the present invention, the transmission of a registered email notice now takes place as follows. In a first step, the sender S drafts the email notice to be sent, including possible attachments, in the usual way and as described above. In deviation of the above, the electronic destination address of the intended receiver A is not used as addressing of this notice, but is added as separate information to the notice, for instance by mentioning this address in the subject line of the email notice. The email address of the intermediary X is used as email address of this notice. When this notice is sent (11, 12, 13), this email notice reaches the intermediary X in the usual way as an ordinary email notice. It may be clear that, after sending this email notice, the sender S may possess a copy thereof in its memory section M.

The intermediary X considers this email notice as a request for the service "registered email", wherein the electronic destination address of the intended receiver is derived from the subject line of the request email. On receiving this request, a unique file F is made by the intermediary X, which exclusively relates to this transaction, and which is stored in a protected memory which is protected against manipulation from outside, and which is only accessible to the supervisor. All actions which relate to this file F are registered in a logbook L, also in a protected memory which is protected against manipulation from outside and which is only accessible to the supervisor.

In a second step, the contents of the request sent by the sender S is authenticated by the intermediary X, i.e. provided with a unique digital signature. This authenticated version of the request notice will be indicated with the phrase "authenticated notice". Perhaps unnecessarily, it is noted that possible attachments are included in the authenticating process, and for the sake of convenience they are considered to be included in the phrase "authenticated notice". The digital signature can contain a plurality of data, such as data relating to the person to which the signature belongs, date and time at which the signature was made, and a checksum regarding the signed notice. Further, preferably, data such as the address data of the sender, the address data of the intended receiver, date and time of drafting the notice are included in the authenticated notice or in the digital signature, respectively.

In a third step, the intermediary X notifies the authenticated notice to the sender S, and the intermediary X requests the sender S for a declaration of approval. In a first variation of embodiment of the present invention, this happens by sending (31, 32, 33) a copy of the authenticated notice to the sender S, as an email notice through the network I, which email notice comprises a request for confirmation.

Of course it may happen that the sender S on reflection wants to make an amendment to the notice to be sent to the addressee A. In that case, the present transaction is cancelled, and a new transaction is drafted on the basis of the amended notice, again starting with step 1 (the request). It is not possible that the sender S makes amendments to the authenticated body. For making amendments before dispatch, as mentioned, a completely new notice must be made.

If the sender S does not want to make amendments to the notice, indeed, he sends the required declaration of approval to the intermediary X. In a first variation of embodiment of the present invention, this happens by sending (34, 35, 36) a confirmation notice through the network I; this confirmation notice can take the form of a return sending of the request for confirmation (31, 32, 33).

As soon as the intermediary X receives the confirmation from the sender S, the intermediary X generates a special webpage WP, which comprises the authenticated notice as well as an access barrier. This access barrier can be formed by asking for a password, or in that the authenticated notice is placed on the webpage WP in a keyed form. Preferably, in this webpage also the data of the sender S are included.

In a fifth step, the intermediary X sends an announcement to the addressee A by "ordinary" email (51, 52, 53), in order to inform the addressee A of the fact that a notice intended for this addressee A is ready at a certain webpage. The announcement notice (51, 52, 53) contains information regarding the web address of this webpage, as well as the required password or key, respectively, for unkeying the authenticated notice. Preferably, the announcement notice (51, 52, 53) contains the web address information in the form of a hyperlink to the webpage WP concerned. It is possible that the password or the key, respectively, is incorporated as an announcement in the announcement notice or in an attached file, and that the keyed webpage WP comprises an input field intended for inputting the key; in that case, the original non-keyed webpage becomes visible only after the right key has been inputted in this input field. Preferably however, the required password or key, respectively, for unkeying the authenticated notice is included in the hyperlink, causing the unkeying to take place automatically when the webpage WP is accessed by using this hyperlink.

In the file F, a copy is recorded of the announcement notice, while in the logbook L is recorded the date and time at which the announcement email has been sent.

Of course, the addressee A can not be forced to visit the webpage WP. If the addressee A has not visited the webpage WP within a predetermined number of days after sending of the announcement email, a reminder is sent by the intermediary X to the addressee A. This predetermined number of days can for instance be equal to ten days. If the addressee A still does not respond within a second predetermined time (for instance five days), the intermediary X makes contact to the sender S, preferably by email, and in consultation with the sender S it is determined whether the webpage WP is kept available any longer. Eventually, it can be decided that the webpage WP is removed, or that the keyed authenticated notice is removed from the webpage WP, if the addressee A does not respond at all within a predetermined time limit. In that case, inter alia the fact will be recorded into the logbook L that the addressee A has not visited the webpage WP.

When the addressee A does visit the webpage WP (61, 62, 63), day and time of this visit are recorded into the logbook L by the intermediary X. Additionally, completely automatically, an information notice is sent to the sender S by the intermediary X, with which the sender S is informed about the date and time of the visit by addressee A to webpage WP. This information notice can preferably be an email (71, 72, 73).

By way of example, it has been discussed above that the sender S is kept informed by the intermediary X per email on the progress of the transaction, and specifically if and when the addressee A has looked at the notice intended for him. However, if desired, the intermediary X offers the possibility to keep the sender S informed through other means of communication, for instance by means of an SMS notice to a mobile phone. If the intermediary X offers this facility, in a third step (confirmation), the intermediary X will ask the sender S by which means he wishes to be kept informed. If the sender S chooses email notices, he can be asked for the email address at which he wishes to receive the notices. If the sender S chooses SMS notices, the sender S will be asked for the telephone number at which he wishes to receive these SMS notices. If the sender S chooses notification to a WAP telephone, then the sender S will be asked for the electronic address at which he wishes to receive the notices. In principle, it is even possible that the sender S is kept informed by fax or by ordinary mail; if the intermediary X offers these possibilities and the sender S chooses for this, he will always be asked for the fax number concerned or the postal address concerned, respectively.

In the foregoing, it has been discussed at step 3 that the intermediary X in a first variation of embodiment of the present invention brings the authenticated notice to the notice of the sender S by sending (31, 32, 33) to the sender S by email a confirmation request as well as a copy of the authenticated notice, and that the sender S sends the confirmation of his order to the intermediary X by email (34, 35, 36), and that only after that the webpage WP accessible for the addressee is made up. In a second variation of embodiment of the present invention, the intermediary X brings the authenticated notice to the notice of the sender S by generating a webpage WPS intended for the sender S, which contains the authenticated notice as well as an access barrier, and by subsequently allowing the sender S to visit this webpage WPS. In this case, preferably, the sender S is sent an announcement notice by email, which contains a hyperlink to this webpage WPS as well as a key for unkeying the keyed authenticated notice, or a password, respectively. In a similar manner as discussed in relation to the addressee, the webpage WPS by way of alternative can contain a input field in which the sender S must input the key in order to unkey the webpage WPS. Then, it is possible that the sender S confirms his order when he visits the webpage WPS, for instance by clicking a confirmation button especially present for this purpose. In order to cancel the transaction, the webpage WPS can contain a cancellation button.

Subsequently, the intermediary X then can generate the webpage WP intended for the addressee A as a second webpage which differs from the first webpage WPS intended for the sender S. In a variation of embodiment it is also possible that the intermediary generates only one webpage, in which case firstly (step 3) access to the webpage is granted to the sender S, and in which case the addressee A is only informed of the existence of the webpage and granted access to this webpage (step 5) after the intermediary X has received the confirmation of the sender S.

The webpage WP intended for the addressee contains primarily the keyed, authenticated notice. Additionally, the webpage WP can contain a possibility for showing a graphic translation of the contents of the digital signature of the supervisor. Further, the webpage WP can comprise an announcement that the visit of the addressee is recorded and that the sender S can, if desired, derive legal consequences from this. Depending on national law, the above-mentioned announcements can be mandatory in order to make deriving legal consequences possible at all.

The addressee A can just take note of the notice read by him on the webpage WP, but it is also possible that he wishes to respond to the notice. In order to facilitate to him the sending of a response to the sender S, the webpage WP preferably contains a form in which the addressee A can input a text if desired. The text inputted by the addressee A in this form is sent by the intermediary X as an email notice to the sender S; preferably this is combined with the sending of the information email (71, 72, 73).

By visiting the webpage WP, the addressee A was able to take note of the notice intended for him. Preferably, the webpage WP contains a possibility to give the addressee A possession of a copy of the notice intended for him, and, depending on national law, this can even be mandatory if the sender S wishes to connect legal consequences to the notice. For this purpose, the webpage WP can contain an option button for making a paper copy, and/or an option button for sending by email a copy of the notice. The webpage WP can contain a third option button, with which the addressee A can notify that he does not wish to use the above-mentioned two options. The webpage WP is designed such that the addressee A is obliged to make a choice from the above-mentioned three options before he can leave the webpage WP. If the addressee A chooses for receiving a copy of the notice intended for him, the intermediary X sends by email (81, 82, 83) a copy of the authenticated notice to the addressee A. Also the choices made by the addressee A, and the possible transmission of a copy to the addressee A, are recorded by the intermediary X into the logbook L. Also if the addressee A would see a way to leave the webpage WP without choosing one of the said options, for instance by switching off his reception apparatus, this fact is noted by the intermediary X and recorded into the logbook L.

In the foregoing, the dispatch of a single email notice to a single addressee has been discussed. However, the invention is also applicable if the sender S wishes to send the email notice to a plurality of addressees. In principle, it is then possible that this is considered as a combination of a plurality of individual transactions, each having an own file F and corresponding notes in the logbook L, in which case always the authenticated notice is equal but the addressee A differs. However, it is also possible that the intermediary X considers this as a single transaction, and that therefore a single file is made, but that, in step 5, a plurality of addressees are notified by the intermediary X of the existence of a webpage WP with a notice intended for them. In that case, a plurality of separate, mutually different keys will be made by the intermediary X, with which the keyed authenticated notice can be unkeyed. In the announcement email (51, 52, 53) to each of the addressees, a hyperlink to the webpage concerned is always incorporated, as discussed in the above, and in this case always one of said keys is associated with this hyperlink. The intermediary X remembers which key is provided to which addressee, and is thus able to recognize a certain addressee by the use of a certain key when this addressee visits the webpage WP. Thus, the visit of a certain addressee can be recorded individually into the logbook L.

Thanks to the protocol proposed by the present invention, the sender S is always aware of the status of the transaction. Specifically, the sender S automatically obtains certainty regarding the fact whether, and if yes when, the addressee A has read the notice intended for him, at least has been able to read this notice because he has opened the webpage WP concerned.

Furthermore, the sender S is capable of obtaining a document in order to be able to proof conclusively that the addressee A, at a certain date and at a certain time, has read the notice in question, at least has been able to note this notice, while further the contents of this notice can also be proven conclusively. In this respect, the present invention offers more certainty than the known postal service "registered dispatch", since in the case of the conventional postal service "registered dispatch", in fact, only the reception of an envelope is registered; the contents of this envelope is also unknown to the postal instance (PTT, courier service).

If the confirmation request in step 3, and the information notice in step 7, as described above by way of example, takes place by email, the sender S can have at his disposal a copy of the authenticated notice and of the notices coming from the intermediary X, which indicate that the addressee A has been able to note this specific notice at a certain moment. However, these email notices are in the power of the sender S and as such are no proof of dispatch. The legally watertight proof regarding the contents of the notice sent to the addressee A, as well as regarding the fact that the addressee A has read, at least has been able to read, this notice at a certain time and date is provided by the supervisor of the intermediary X. On request by the sender S or by the addressee A, or by order of a third party, the supervisor drafts an official declaration or observation, in which the facts concerned are mentioned, including date and time, and in which the contents of the notice is added. The supervisor is an independent party, who guarantees the correctness of the data concerned. It is this declaration or observation made by the supervisor of the intermediary X which has legal power of proof.

It is noted that the declaration or observation made by the supervisor is a completely objective reproduction of the data from the logbook L managed by the supervisor himself and/or the file F managed by the supervisor himself.

The legal power of proof is obtained on the one hand from the fact that the system proposed by the present invention is able to guarantee the reliability of the data in the logbook L. On the other hand, this legal power of proof is supported by the fact that the declaration or observation concerned is made by an independent party, who has been having the data in the logbook L under his own management at all times. Independent from national law, the strength of this legal power of proof can be increased if the supervisor of the intermediary X fulfills certain qualifications, for instance in that the supervisor enjoys the status of "trusted third party" TTP. In general, it can be said that a TTP is competent under national law to giving official declarations or observations which have power of proof in legal procedures. By way of example, a supervisor can be a sworn notary or bailiff or the like. The TTP could also be a public body specially established for this purpose.

In order to give legal power of proof to the declaration or observation given by the supervisor, the integrity of the contents of the logbook L must be raised above each doubt. An important aspect of the present invention concerns the protection of the integrity of the data in the logbook L. In principle, it could technically be possible that the sender S directly consults the data in the file concerned and/or in the logbook L in order to thus inform himself on the status of the transaction concerned. However, the data in the logbook L could then be more vulnerable to manipulation by the sender S, and the integrity would not be guaranteed. In the case of the system proposed by the present invention, the logbook L is not accessible for the sender S (and, of course, neither for the addressee A). Only the intermediary X has access to the logbook L and the file F, and determines at which moment which data from the logbook L and/or from the file F are sent to the sender S.

An important aspect here is that the files of all transactions as well as the logbook L are physically kept in a memory which is not directly in connection with the computer network I concerned and which are, therefore, not accessible to a sender S or an addressee A, in whichever devious way.

The email notices which the intermediary X sends to and receives from the sender S or the sender A, respectively, are taken care of by an email server, while the webpage WP with the keyed authenticated notices are taken care of by a web server. These servers can be implemented as different applications which are installed on a common computer (software separation), but it is also possible that the email server application and the web server application run separately on two different computers (hardware separation). Further, the intermediary X has at his disposal a memory not directly accessible through said network X, in which a copy of the original notice is kept in the file specially made for the transaction, and in which further said logbook L is kept, with recorded therein the actions which relate to this file. This memory can be implemented as a separate partition of the said common computer or one of the two of said different computers, respectively, but can also be implemented on a separate computer.

In the foregoing, it is mentioned that the sender S must include the electronic destination address of the intended addressee A in his request in step 1. If this electronic destination address (email address) is incorrect, the email announcement in step 5 (51, 52, 53) can of course not reach the addressee A. In principle, this is for the responsibility of the sender S. However, when the electronic destination address concerned does not exist at all, an error notice is sent back to the intermediary X by the provider PA. Then, the intermediary X notifies the sender S of the fact that the electronic destination address sent along with the request in step 1 does not exist. With this, the transaction can be considered as being ended, with the reason that the order given can not be executed. Preferably however, the intermediary X offers to the sender S an opportunity to correct the electronic destination address of the addressee A. On the basis of the corrected address, the intermediary X makes a new authenticated notice, and the procedure continues further from step 2 as discussed in the above.

In the above, it has been discussed that the addressee A is notified by the intermediary X by email (step 5) of the fact that a notice intended for him is ready on the webpage WP, wherein this email notice contains a hyperlink to this webpage WP, associated with a key for unkeying this webpage. Besides this primary announcement by email, the intermediary X can also send other announcements to the addressee A through one or more other communication channels. Also possible reminder notices, if the addressee A does not visit the webpage WP within a predetermined time, can be sent to the addressee A through such alternative communication channels. If the intermediary X offers these facilities and the sender S wishes to use them, the sender S should notify this to the intermediary X in the confirmation step, wherein specifically the coordinates of the addressee A relating to this alternative communication channel must be notified to the intermediary X by the sender S. In this context, one might for instance think of a notice by SMS or by fax, of to a WAP telephone.

Normally, the costs of the services offered by the intermediary X will be charged to the sender S. The way in which this happens is of less importance to the present invention and will not be discussed here in more detail. Likewise, if the addressee A wishes to send a response notice to the sender S, also using the services of the intermediary X, this response notice will be considered by the intermediary X as a complete new transaction, for which a new file is made, and for which the dispatch proceeds in an identical way as discussed in the above, wherein now A fulfills the role of sender and S fulfills the role of addressee. In that case, the costs of the answer will be charged to A. In a further elaboration of the present invention, it is however possible that the addressee A sends an answer to the sender S, in which case legal power can likewise be derived from this answer by the addressee A, but wherein the costs of the response will be charged by the intermediary X to the original sender S. If the intermediary X offers this facility and the sender S wishes to use this, this should be notified in the confirmation step, and the webpage WP will contain an announcement which indicates this facility to the addressee A.

Conversely, it is however also possible that the services of the intermediary X are charged to the addressee A. To this end, the intermediary X offers to his customers the possibility of renting or buying an email address especially intended for this purpose, which email address can, if desired, be notified by this customer to business relations of this customer concerned. This is comparable to an answering number for ordinary mail. If such a business relation wishes to send a registered email notice to the customer A concerned of the intermediary X, this business relationship will use this special email address, which is recognized by the intermediary X and is a sign for the intermediary X that all costs of this transaction should be charged to the addressee A.

In the foregoing, the present invention is exclusively described for application of registered dispatch of an "ordinary" email notice, wherein the sender S wishes to derive a legal power of proof from this email notice. The initiative to this transaction is fully taken by the sender S. However, situations are conceivable wherein the initiative is in fact taken by the addressee A. An example of this is described above, and compared to an answering number in ordinary mail, in which case the costs of the services offered by the intermediary X are charged to the addressee A. However, it is also possible that the addressee A is a provider of information, and makes this information available to third parties on payment. When using ordinary mail, the applicant will then send a request to this information provider, and the information provider will send the required information as well as a debit note to the applicant. Possibly, the debit note can be sent first, and the required information can be sent when the debit note has been paid. In any case, the applicant pays the information provider for the information offered, and pays the postal intermediary for transferring his written request (postage). Of course, a disadvantage of this is that the time between request and receiving the information can be relatively long and handling the request is comparably labor intensive. The present invention makes it possible that the requested information can also be requested by email and can be sent by the information provider, while all costs are charged to the applicant.

By way of example, the information provider can be the land register, while the offered information concerned is cadastral information. In another example, the information offered can relate to public transport information, weather information, etc.

The information provider in this example is the party who is indicated by A (addressee) in the figure. This party has bought or rented from the intermediary X an email address especially intended for this purpose, and advertises with the email address concerned as information provider; in this case, it should of course be made clear that someone who requires information through this email address must pay costs for that.

Requesting such information from the information provider A now takes place as follows. The applicant S sends by email a registered notice to the information provider A, wherein the steps 1 to 7 discussed in the above are taken. In response to the request, the information provider A subsequently sends the required information to the email address given by the applicant S, also by registered email, wherein the information sent now has the status of response to the earlier request, such that request and response are included in one and the same file kept by the intermediary X. Subsequently, the intermediary X charges the costs of services provided to the applicant S. In those costs are included the costs of the services rendered by the intermediary X himself, i.e. the dispatch of the two registered email notices, but also the costs charged by the information provider A for the information provided. Then, the intermediary X functions as it were as collection system for the information provider A. The costs charged by the information provider A are transferred to the information provider A by the intermediary X. Although this can be variable costs, the structure of this service will generally be set up such that the information provider A charges a fixed amount per transaction, such that the intermediary X can thus transfer a fixed amount per transaction to the information provider A.

This system has advantages for all parties concerned. The information provider A does not need to send a bill to an individual applicant S for each information request, so that the financial administration at the side of the information provider A can be simplified significantly; as a consequence, the information can be offered at lower price. The intermediary X will keep a record of the number of transactions handled in this way over a certain period of time, for instance a month, and will transfer the corresponding total amount to the information provider A, so that also in this respect the number of financial transactions can be reduced significantly, so that the work can be done more efficiently.

It will be clear to a person skilled in the art that the scope of the present invention is not limited to the examples discussed in the above, but that several amendments and modifications thereof are possible without deviating from the scope of the invention as defined in the attached claims. For instance, if the addressee receives the announcement notice on his telephone, possibly WAP telephone, which can happen because the sender has inputted this or because the addressee has switched the reception of his electronic notices through to this mobile telephone, then the addressee can be offered the possibility of forwarding a copy of the notice to an electronic destination address to be indicated by him, such as for instance an email address.

Further, in the announcement notice and/or in the authenticated notice, the date and the time at which the sender has made the notice ready for dispatch to the intermediary, and/or the date and time at which the intermediary has received the request notice, can be incorporated.

Further it is possible that the intermediary X, in special cases, requires the sender and/or addressee to identify himself, for instance by placing an electronic/digital signature.

## Claims

1. Method for sending an electronic notice from a sender (S) through a network (I) to an addressee (A) with intervention of an intermediary (X), wherein the notice comprises a message part, contains information with respect to the network address of the addressee (A) and with respect to the network address of the sender (S), and is possibly provided with attached files;
wherein the intermediary (X), in a protected memory, keeps a logbook (L) with data relating to different steps of dispatch; the method comprising the steps of:
(a) in a first step, the sender (S) generates the message part and the possible attached files of the notice, as well as the information relating to the network address of the addressee (A), and sends (11, 12, 13) the combination to the intermediary (X) as electronic notice;
(b) in a second step, the intermediary (X) provides the notice received and the possible attached files with an electronic authentication feature (electronic signature), and the intermediary (X) stores a copy of the authenticated notice in a protected memory;
(c) in a third step, the intermediary (X) brings the authenticated notice to the notice (31, 32, 33) of the sender (S), after which the sender (S) sends a confirmation message (34, 35, 36) to the intermediary (X);
(d) in a fourth step, the intermediary (X) generates a webpage (WP), and places the authenticated notice on this webpage (WP), provided with an access barrier;
(e) in a fifth step, the intermediary (X) generates an announcement email notice, of which the message part (or as alternative: a possibly attached file) comprises an announcement which indicates the fact that an email notice is ready at said webpage (WP), and wherein the message part (or as alternative: a possible attached file) comprises a key for passing said access barrier, and the intermediary (X) sends (51, 52, 53) this announcement email notice to the network address of the addressee (A) given by the sender (S) in the first step;
(f) in a sixth step, the addressee (A) visits (61, 62, 63) the said webpage (WP);
(g) in a seventh step, the intermediary (X) notifies (71, 72, 73) the sender (S) of the fact that the addressee (A) has visited the said webpage (WP) and has been able to take notice of the electronic notice and/or file.

2. Method according to claim 1, wherein the announcement email notice comprises a hyperlink to the said webpage (WP).

3. Method according to claim 1 or 2, wherein said access barrier is formed by a password lock, and wherein said key comprises an authorized password.

4. Method according to claim 1 or 2, wherein said access barrier is formed by a keying of the authenticated notice, and wherein said key is suitable for unkeying the authenticated notice.

5. Method according to claim 3 or 4, as far as depending on claim 2, wherein said key is incorporated in the said hyperlink.

6. Method according to any of the previous claims, wherein in the third step the intermediary (X) notifies (31, 32, 33) the authenticated notice to the sender (S) by sending this authenticated notice to the sender (S) by email;
and wherein the sender (S) sends (34, 35, 36) the confirmation message to the intermediary (X) by email, too.

7. Method according to any of the claims 1-5, wherein the intermediary (X) notifies the authenticated notice to the sender (S) by generating a webpage (WPS), which contains the authenticated notice as well as an access barrier, which webpage (WPS) is provided with a confirmation button exclusively accessible to the sender (S); and by subsequently sending the sender (S) an announcement notice by email, which comprises a hyperlink to this webpage (WPS) as well as a key for passing said access barrier.

8. Method according to claim 7, wherein the sender (S) visits the said webpage (WPS) using said key; and wherein the sender (S) confirms his order by clicking the said confirmation button.

9. Method according to claim 7 or 8, wherein the said webpage (WPS) is the same as the webpage (WP) intended for the addressee.

10. Method according to any of the previous claims, wherein the intermediary (X) keeps the logbook (L) and the authenticated notice in memories not coupled directly to the said network (I), which preferably are mutually separated.

11. Method wherein an electronic notice intended for an addressee (A) is received by a sender (S) through a network (I), which electronic notice comprises a message part, contains information with respect to the network address of the addressee (A) and relating to the network address of the sender (S), and possibly is provided with attached files; and
wherein this notice, at least the message part thereof as well as the possible attached files, is made available to the addressee (A);
wherein, in a protected memory, a logbook (L) is kept with data relating to different steps of dispatch;
which method comprises the steps of:
(a) in a first step, an electronic request notice coming from the sender (S) is received, which comprises the message part and the possible attached files of the said notice, as well as the information relating to the network address of the addressee (A);
(b) in a second step, the received notice and the possibly attached files are provided with an electronic authentication feature (electronic signature), and a copy of the authenticated notice is stored in a protected memory;
(c) in a third step, the authenticated notice is notified to the sender (S), after which a confirmation message is received from the sender (S);
(d) in a fourth step, a webpage (WP) is generated, and the authenticated part of the notice is placed on this webpage (WP), provided with an access barrier;
(e) in a fifth step, an announcement email notice is generated, of which the message part (or alternatively: a possible attached file) contains an announcement which indicates the fact that an email notice is ready on said webpage (WP), and wherein the message part (or alternatively: a possibly attached file) contains a key for passing said access barrier, and this announcement email notice is sent to the network address of the addressee (A) received in the first step;
(f) in a sixth step, it is checked whether the addressee (A) visits the said webpage (WP);
(g) as soon as in the sixth step it is found that the addressee (A) visits the said webpage (WP), in a seventh step the sender (S) is informed of the fact that the addressee (A) has visited the said webpage (WP) and has been able to take notice of the electronic notice and/or file.

12. Method according to claim 11, wherein the announcement email notice contains a hyperlink to the said webpage (WP).

13. Method according to claim 11 or 12, wherein said access barrier is formed by a password block, and wherein said key comprises an authorized password.

14. Method according to claim 11 or 12, wherein said access barrier is formed by a keying of the authenticated notice, and wherein said key is suitable for unkeying the authenticated notice.

15. Method according to claim 13 or 14, as far as depending on claim 12, wherein said key is incorporated in the said hyperlink.

16. Method according to any of the claims 11-15, wherein in the third step the authenticated notice is notified to the sender (S) by sending this authenticated notice to the sender (S) by email; and wherein the confirmation message coming from the sender (S) is received by email, too.

17. Method according to any of the claims 11-15, wherein the authenticated notice is notified to the sender (S) by generating a webpage (WPS) which contains the authenticated notice as well as an access barrier, which webpage (WPS) is provided with a confirmation button exclusively accessible to the sender (S); and by subsequently sending an announcement notice to the sender (S) by email, which contains a hyperlink to the webpage (WPS) as well as a key for passing said access barrier.

18. Method according to claim 17, wherein it is checked whether the sender (S) this webpage (WPS) and whether the sender (S) clicks the said confirmation button, which clicking is interpreted as a confirmation notice.

19. Method according to any of the claims 11-18, wherein the logbook (L) and the authenticated notice are kept in a memory not directly coupled to the said network (I).

20. Method according to any of the previous claims, wherein the digital signature contains data relating to the person to which the signature belongs, date and time at which the signature has been made, and a checksum regarding the signed notice.

21. Method according to any of the previous claims, wherein the digital signature contains the address data of the sender, the address data of the intended receiver, and date and time at which the notice has been made up by the sender and/or at which the notice has been received by the intermediary.

22. Method according to any of the previous claims, wherein the intermediary (X) requires the sender and/or the addressee to identify himself, for instance by placing an electronic/digital signature.

23. System (X) for executing a method according to any of the previous claims, comprising:
a first email server coupled to the said network (I) for sending and receiving the said email notices;
a second web server coupled to the said network (I) for placing the said webpage (WP) thereon;
and one or more memories not directly coupled to the said network (I), in which a copy of the original notice is kept in the file especially made for the transaction, and in which further the said logbook (L) is kept, with recorded therein the actions relating to this file.

24. System according to claim 23, wherein the said email server and the said web server are implemented as different applications which are installed on a common computer (software separation).

25. System according to claim 23, wherein the said email server and the said web server are implemented as separate email server application and web server application which run separately on two different computers (hardware separation).

26. System according to any of the claims 23-25, wherein said memories are implemented as separate partitions of one of the said computers.

27. System according to any of the claims 23-25, wherein said memories are implemented on a separate computer.
